# EUROPÄISCHE PATENTSCHRIFT

(11) **EP 1 865 393 B1**
(45) Veröffentlichungstag und Bekanntmachung des Hinweises auf die Patenterteilung: **24.03.2010**
(21) Anmeldenummer: 06011855.1
(22) Anmeldetag: 08.06.2006
(51) Int. Cl.: G05B 19/042, G06F 11/00

(54) **Verfahren zum Betrieb eines Automatisierungssystems, Kommunikationsteilnehmer und Automatisierungssystem**
Method for operating an automation device, communication participant and automation system
Procédé destiné à l'opération d'un système d'automatisation, participant à la communication et système d'automatisation

(43) Veröffentlichungstag der Anmeldung: 12.12.2007
(73) Patentinhaber: SIEMENS AKTIENGESELLSCHAFT, 80333 München (DE)
(72) Erfinder: Sieberling, Patrik, 90556 Seukendorf (DE); Tretter, Albert, 92712 Pirk (DE)

(56) Entgegenhaltungen:
- EP-A- 1 607 864
- EP-A- 1 674 955
- EP-A2- 0 837 394
- DE-A1- 10 030 991
- US-A- 4 860 289
- US-A- 5 353 093

## Beschreibung

Die Erfindung betrifft ein Verfahren zum Betrieb eines Automatisierungssystems mit einer Anzahl kommunikativ verbundener Kommunikationsteilnehmer (Kommunikationsverbund) gemäß dem Oberbegriff des Anspruchs 1 sowie ein nach dem Verfahren arbeitendes Automatisierungssystem. Außerdem betrifft die Erfindung einen Kommunikationsteilnehmer gemäß dem Oberbegriff des Anspruchs 10 zum Betrieb in einem Kommunikationsverbund.

Verfahren zum Betrieb eines Automatisierungssystems mit einer Anzahl kommunikativ verbundener Kommunikationsteilnehmer sind allgemein bekannt. Exemplarisch wird auf die DE 198 01 137 verwiesen, in welcher ein Verfahren angegeben wird, bei welchem eine Eingabeeinheit zur Aufnahme von Prozesssignalen und mindestens eine Ausgabeeinheit zum Ansteuern externer Peripherie kommunikativ über einen Bus miteinander verbunden sind. Zumindest eine der Eingabeeinheiten und zumindest eine der Ausgabeeinheiten sind als fehlersichere Eingabeeinheit bzw. fehlersichere Ausgabeeinheit ausgebildet, wobei die fehlersichere Eingabeeinheit der fehlersicheren Ausgabeeinheit zu vorgegebenen Zeitpunkten ein "Watchdog"-Telegramm übermittelt. Das "Watchdog"-Telegramm weist zumindest eine die adressierte Ausgabeeinheit bezeichnende Zielkennung und eine die sendende Eingabeeinheit bezeichnende Ursprungskennung auf und die Ausgabeeinheit wertet den kontinuierlichen Empfang des "Watchdog"-Telegramms als Indiz für eine intakte Kommunikationsbeziehung aus; andernfalls wird die angeschlossene Peripherie in einen sicheren Zustand überführt.

Ein alternatives Verfahren wird in der US 2006/0053349 beschrieben, wobei ein Mikrocomputer einen "Watchdog"-Zeitzähler und einen externen Reset-Signalgenerator aufweist. Wenn ein Kontrollprogramm unkorrekt ausgeführt wird, generiert der "Watchdog"-Zeitzähler ein internes Reset-Signal und der externe Reset-Signalgenerator ein externes Reset-Signal. Ein in der US 6,181,677 angegebenes, weiteres Verfahren bezieht sich auf ein Absichern gegen Datenverlust durch aufgrund von "out of service"-Bedingungen unterbrochenen Datentransfer in einem Netzwerk. Das beschriebene Verfahren umfasst dabei einen "Watchdog"-Timer, welcher jeweils rückgesetzt wird, wenn von einer "data service unit" oder einer "channel service unit" ein "heartbeat"-Signal empfangen wird, welches regelmäßig von einer entfernten Einheit über einen separaten Kanal gesendet wird. Wird das "heartbeat"-Signal nicht innerhalb der spezifischen Zeit empfangen, läuft die "Watchdog"-Timer-Zeit ab und ein alternativer Kommunikations-Link wird etabliert.

Aus der EP 1 674 955 ist ein Verfahren zur Überwachung der Funktionsweise eines insbesondere PC-basierten Automatisierungssystems bekannt, bei dem ein Hauptprozessor einem redundanten Co-Prozessor während der Abarbeitung einer Anwendersoftware beim Erreichen von Grenzen von davon umfassten Programmmoduln eine Nachricht sendet und dabei eine Überwachungszeit initialisiert. Als Antwort auf den Erhalt der Nachricht sendet der Co-Prozessor eine Nachricht zurück, wobei bei Erhalt der Nachricht auf Seiten des Hauptprozessors überprüft wird, ob der dann aktuelle Stand der Überwachungszeit innerhalb vorgegebener Grenzen liegt.

Der Erfindung liegt die Aufgabe zugrunde, ein besonders geeignetes Verfahren zur zeitnahen Erkennung eines Ausfalls eines zentralen Kommunikationsteilnehmers bei gleichzeitiger geringer Datenbelastung des Kommunikationsverbundes anzugeben. Darüber hinaus sollen ein zur Durchführung des Verfahrens besonders geeigneter Kommunikationsteilnehmer sowie ein besonders geeignetes Automatisierungssystem angegeben werden.

Bezüglich des Verfahrens wird diese Aufgabe erfindungsgemäß gelöst durch die Merkmale des Anspruchs 1. Dazu ist vorgesehen, dass mindestens ein zentraler Kommunikationsteilnehmer mindestens ein Datentelegramm an mindestens einen anderen Kommunikationsteilnehmer sendet oder senden kann und dass zumindest für den zentralen Kommunikationsteilnehmer mindestens eine Überwachungseinheit vorgesehen ist, welche mit einem in grundsätzlich bekannter Weise erfolgenden Versenden eines Datentelegramms durch den zentralen Kommunikationsteilnehmer für eine vorgegebene oder vorgebbare erste Zeitspanne deaktiviert wird. Das Deaktivieren der Überwachungseinheit für eine vorgegebene oder vorgebbare erste Zeitspanne wirkt sich dabei wie ein "Nachtriggern" der Überwachungseinheit aus. Das mindestens eine versandte Datentelegramm wird somit wie ein aus dem Stand der Technik (z. B. DE 198 01 137) bekanntes "Watchdog"-Telegramm, also als "Lebenszeichen" behandelt. Bei dem aus der DE 198 01 137 bekannten Verfahren muss aufgrund eines zusätzlichen Versendens von mindestens einem "Watchdog"-Telegramm ein Kompromiss bezüglich einer Minimierung der Dauer der Deaktivierung der Überwachungseinheit und einer Belegung von Busbandbreite geschlossen werden, da jedes versandte "Watchdog"-Telegramm Busbandbreite belegt, welche somit nicht dem Versand von Datentelegrammen zur Verfügung steht.

Wird das mindestens eine versandte Datentelegramm erfindungsgemäß wie ein Lebenszeichen-Telegramm behandelt, kann die Dauer der ersten Zeitspanne der Deaktivierung der Überwachungseinheit sehr klein gewählt werden und zudem ergibt sich eine Minimierung der Belegung von Busbandbreite.

Der zentrale Kommunikationsteilnehmer kann während des Betriebs des Kommunikationsverbundes wechseln, jedoch ist für jeden Kommunikationsteilnehmer, der als zentraler Kommunikationsteilnehmer in Frage kommt, mindestens eine Überwachungseinheit der oben genannten Art vorgesehen. Der oder jeder Kommunikationsteilnehmer des Kommunikationsverbundes, welcher nicht als zentraler Kommunikationsteilnehmer fungiert, wird hier und im Folgenden als "anderer Kommunikationsteilnehmer" bezeichnet und kann ebenso wie der zentrale Kommunikationsteilnehmer während des Betriebs des Kommunikationsverbundes wechseln. In dem Kommunikationsverbund, also der Gesamtheit aus zentralem Kommunikationsteilnehmer und dem oder jedem anderen Kommunikationsteilnehmer, welcher z. B. ein Bussystem umfassen kann, sendet der oder jeder zentrale Kommunikationsteilnehmer zumindest ein Datentelegramm an jeden anderen Kommunikationsteilnehmer. Der oder jeder andere Kommunikationsteilnehmer empfängt das Datentelegramm in an sich bekannter Art und Weise. Mit dem Versenden des Datentelegramms, also im Zusammenhang mit dem Versenden, z. B. vor, während oder nach dem Versenden, wird die Überwachungseinheit für eine vorgegebene oder vorgebbare erste Zeitspanne deaktiviert. Eine Dauer der Deaktivierung, die z. B. durch einen Zeitraum, einen Zeitpunkt oder einen Zeitabstand bestimmt ist, kann beispielsweise mittels eines Timers, einer Uhr, eines Oszillators oder eines Signalempfängers vorgegeben werden. Die Deaktivierung, welche als eine reversible Deaktivierung vorgesehen ist, wird mit einem Ablaufen z. B. der vorgegebenen Zeitspanne aufgehoben, wobei das Ablaufen nur dann erfolgen kann, wenn kein Versand eines Datentelegramms zu einer neuerlichen Deaktivierung der Überwachungseinheit führt. Durch den Versand des Datentelegramms kann beispielsweise ein Timer mit einem vorgegebenen, eine Zeitspanne repräsentierenden Schwellwert rückgesetzt und erneut gestartet werden. Bei einem inkrementellen Timer, einer Uhr oder dergleichen kann ein neuer Zeitpunkt für das Ablaufen der Zeitspanne, also ein neuer Schwellwert festgelegt werden.

Bezüglich des Kommunikationsteilnehmers, der in einem Kommunikationsverbund als zentraler Kommunikationsteilnehmer fungiert, wird die genannte Aufgabe durch einen Kommunikationsteilnehmer mit den Merkmalen des Oberbegriffs des Anspruchs 8 erfindungsgemäß durch Mittel zum Deaktivieren der dem Kommunikationsteilnehmer zugeordneten Überwachungseinheit für eine vorgegebene oder vorgebbare Zeitspanne im Zusammenhang mit jedem Versenden eines solchen Datentelegramms gelöst. Ein solcher Kommunikationsteilnehmer kommt als zentraler Kommunikationsteilnehmer in dem Verfahren in Betracht. Als Deaktivierungsmittel kommt dabei z. B. ein geeignet angesteuerter Signalgeber in Betracht, dessen Ausgangssignal der Überwachungseinheit zugeführt wird. Hierdurch können in einer Ausführungsform der Überwachungseinheit, bei welcher beispielsweise ein Zähler vorgesehen ist, z. B. ein Rücksetzen des Zählers und damit eine Deaktivierung der Überwachungseinheit erfolgen.

Bezüglich des Automatisierungssystems wird die genannte Aufgabe erfindungsgemäß gelöst mit Mitteln, insbesondere Programmcodemitteln, z. B. einer Softwareimplementation des oder jedes oben genannten Verfahrensschrittes oder der oder jeder oben genannten Verfahrensschrittfolge, zur Durchführung des erfindungsgemäßen Verfahrens.

Mit dem Ablauf der vorgegebenen oder vorgebbaren ersten Zeitspanne der Deaktivierung der Überwachungseinheit wird durch den zentralen Kommunikationsteilnehmer ein Lebenszeichen-Telegramm beispielsweise hardware- oder softwareunterstützt versandt, welches von jedem anderen Kommunikationsteilnehmer empfangen wird oder empfangen werden kann. Der Inhalt dieses Lebenszeichen-Telegramms kann beliebig sein. Das Lebenszeichen-Telegramm selber kann beispielsweise in einer Datenbasis hinterlegt oder hinterlegbar sein und/oder zufällig oder regelbasiert erzeugt werden oder erzeugbar sein.

Für alle oder bestimmte Kommunikationsteilnehmer, insbesondere den oder jeden anderen Kommunikationsteilnehmer neben dem zentralen Kommunikationsteilnehmer, ist eine Sicherungs-Einrichtung vorgesehen, welche bei einem Empfang des Datentelegramms für eine vorgegebene oder vorgebbare zweite Zeitspanne deaktiviert wird. Die Deaktivierung kann dabei mit dem Empfang des Datentelegramms oder mit dem Rücksenden einer Reaktion - Response - an den zentralen Kommunikationsteilnehmer erfolgen. Da das versandte Datentelegramm gleichberechtigt mit dem versandten Lebenszeichen-Telegramm zur Überwachung des zentralen Kommunikationsteilnehmers herangezogen wird, können die Zeitspannen für die Deaktivierung der Überwachungseinheit und/oder der Sicherungs-Einrichtung sehr klein gehalten werden, ohne eine vorhandene Kommunikationsdichte durch zusätzlich versandte Lebenszeichen-Telegramme zu erhöhen. Bei hoher Kommunikationsdichte werden demnach keine zusätzlichen Lebenszeichen-Telegramme benötigt, nur bei geringer Kommunikationsdichte oder bei einem Fehlen von Kommunikation, beispielsweise in einer Sendepause, werden Lebenszeichen-Telegramme versandt. Somit wird die durch den Versand von Lebenszeichen-Telegrammen belegte Bandbreite minimiert. Zusätzlich wird die Sicherheit durch die kleine Zeitspanne der Deaktivierung der Überwachungseinheit und/oder der Sicherungs-Einrichtung erhöht, da ein Ausfall des zentralen Kommunikationsteilnehmers sehr schnell registriert wird.

Bevorzugt vorgesehen ist, dass mit einem Ablauf der vorgegebenen oder vorgebbaren zweiten Zeitspanne der Deaktivierung der Sicherungs-Einrichtung der jeweilige andere Kommunikationsteilnehmer ein Signal, insbesondere für eine oder mehrere Komponenten des Kommunikationsverbundes oder des Automatisierungssystems, auslöst. Aus dem Signal kann auch ein optischer oder akustischer Alarm oder eine Kombination aus beidem und dergleichen abgeleitet werden.

Bevorzugt wird mit dem Ablauf der vorgegebenen oder vorgebbaren zweiten Zeitspanne der jeweilige andere Kommunikationsteilnehmer in einen sicheren Modus überführt. Hierdurch kann beispielsweise ein Datenverlust verhindert werden, wenn durch einen Ausfall des zentralen Kommunikationsteilnehmers dieser an ihn übermittelte Daten nicht empfangen, verarbeiten oder hinterlegen kann oder wenn der zentrale Kommunikationsteilnehmer keine Daten an den oder jeden anderen Kommunikationsteilnehmer übermittelt. Zudem kann somit bei einem Ausfall des zentralen Kommunikationsteilnehmers beispielsweise ein zu einer Steuerung eines Aktors des Automatisierungssystems, z. B. eines Ventils, vorgesehener oder ein den Aktor umfassender jeweiliger anderer Kommunikationsteilnehmer beispielsweise auf hinterlegte sichere Grundeinstellungen, z. B. "Ventil schließen", rückgesetzt werden. Somit könnte bei einem Ausfall des zentralen Kommunikationsteilnehmers das Automatisierungssystem abgesichert werden, beispielsweise durch ein Verhindern eines unkontrollierten Zuflusses durch ein geöffnetes Ventil.

Besonders bevorzugt wird mit einem Empfang des von einem der anderen Kommunikationsteilnehmer abgesetzten Signals der zentrale Kommunikationsteilnehmer zurückgesetzt, um einen neuen Aufbau einer kommunikativen Verbindung zwischen dem oder jedem zentralen Kommunikationsteilnehmer und dem oder den jeweiligen anderen Kommunikationsteilnehmern zu ermöglichen. Alternativ oder zusätzlich kann vorgesehen sein, dass einer der jeweiligen anderen Kommunikationsteilnehmer eine Funktion als zentraler Kommunikationsteilnehmer übernimmt, um gegebenenfalls bei einem erneuten Ausfallen des zentralen Kommunikationsteilnehmers wiederum durch einen nochmals anderen Kommunikationsteilnehmer funktionell ersetzt zu werden, wobei eine Reihenfolge des funktionellen Ersetzens vorgegeben oder vorgebbar sein kann. Die Reihenfolge kann sich jedoch auch zufällig ergeben oder anhand von einer oder mehreren hinterlegten oder hinterlegbaren Regeln ermittelt werden. Zusätzlich oder alternativ kann ebenfalls vorgesehen sein, dass ein Rücksetzen des zentralen Kommunikationsteilnehmers erfolgt, wenn keine Deaktivierung der Überwachungseinheit für die vorgegebene oder vorgebbare erste Zeitspanne erfolgt.

Gemäß einer speziellen Ausführungsform der Erfindung wird die Überwachungseinheit für die vorgegebene oder vorgebbare erste Zeitspanne erst dann deaktiviert, wenn eine Reaktion mindestens eines jeweiligen anderen Kommunikationsteilnehmers auf das von dem zentralen Kommunikationsteilnehmer versandte Datentelegramm oder auf das von dem zentralen Kommunikationsteilnehmer versandte Lebenszeichen-Telegramm empfangen wird. Bei dieser Ausführungsform umfasst der Zeitraum, der bisher als "mit dem Versenden des Datentelegramms" angegeben wurde, also auch die Zeitspanne bis zum Eintreffen und/oder Erkennen einer Reaktion auf den ursprünglichen Versand des Datentelegramms. Bei dieser Ausführungsform erfolgt das Deaktivieren der Überwachungseinheit also erst, wenn sichergestellt ist, dass eine intakte kommunikative Verbindung, welche Senden und Empfangen von mindestens einem Datum ermöglicht, zwischen mindestens zwei Kommunikationsteilnehmern besteht.

Besonders bevorzugt fungiert der oder jeder zentrale Kommunikationsteilnehmer als Master und der oder jeder andere Kommunikationsteilnehmer als Slave. Der Master besitzt dabei die alleinige Berechtigung, Datentelegramme von dem Slave anzufordern, wobei eine Funktionszuordnung im Laufe des Betriebs des Kommunikationsverbundes wechseln kann.

Bei einer Initialisierung des Kommunikationsverbundes kann beispielsweise vorgesehen sein, dass zunächst ein Lebenszeichen-Telegramm oder ein Datentelegramm von dem oder jedem zentralen Kommunikationsteilnehmer versandt wird und die Überwachungseinheit daraufhin für die vorgegebene oder vorgebbare erste Zeitspanne deaktiviert wird oder dass bei der oder zeitnah zu der Initialisierung zunächst die Überwachungseinheit für die vorgegebene oder vorgebbare Zeitspanne deaktiviert ist.

Der zentrale Kommunikationsteilnehmer umfasst Mittel zum Erzeugen und Versenden mindestens eines Lebenszeichen-Telegramms nach Ablauf der vorgegebenen oder vorgebbaren ersten Zeitspanne der Deaktivierung der Überwachungseinheit, also z. B. eine geeignet angesteuerte oder aktivierte Sendeeinrichtung grundsätzlich bekannter Art, so dass sich die gleichen Vorteile wie für das Verfahren zum Betrieb des Automatisierungssystems ergeben.

Darüber hinaus betrifft die Erfindung auch ein Computerprogramm mit durch einen Computer ausführbaren Programmcodeanweisungen zur Implementierung des oben beschriebenen Verfahrens sowie ein Computerprogrammprodukt, insbesondere ein Speichermedium, mit einem durch einen Computer ausführbaren Computerprogramm sowie ein Automatisierungssystem mit Mitteln, z. B. Programmcodemitteln, insbesondere einer Softwareimplementation des oder jedes oben genannten Verfahrensschrittes oder der oder jeder oben genannten Verfahrensschrittfolge, zur Durchführung des Verfahrens.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen
- FIG 1: eine schematisch vereinfachte Darstellung eines Verfahrens zum Betrieb eines Automatisierungssystems sowie
- FIG 2 und 3: jeweils eine schematisch vereinfachte Darstellung eines alternativen Verfahrens zum Betrieb des Automatisierungssystems.

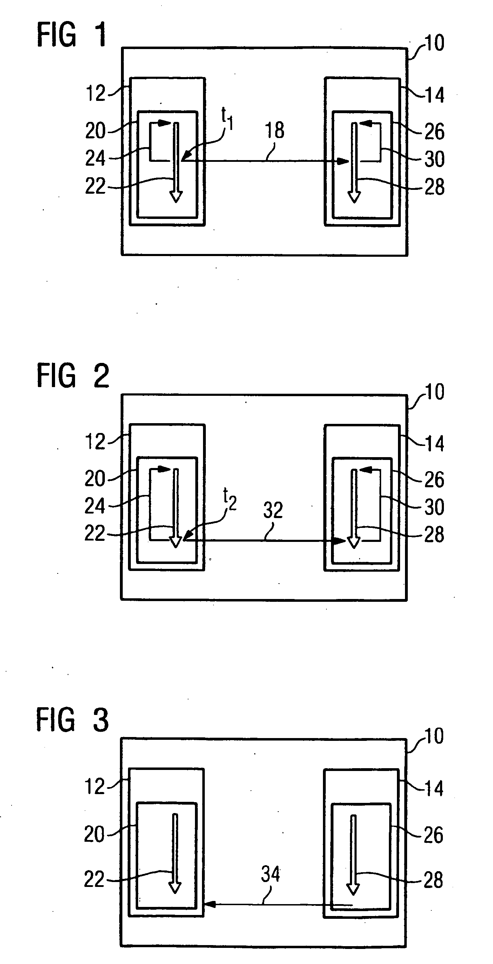

FIG 1 zeigt eine schematisch vereinfachte Darstellung eines Verfahrens zum Betrieb eines Automatisierungssystems mit einem Kommunikationsverbund 10, in welchem mindestens ein zentraler Kommunikationsteilnehmer 12 und mindestens ein anderer Kommunikationsteilnehmer 14 kommunikativ verbunden sind. Der zentrale Kommunikationsteilnehmer 12 sendet zu einem Zeitpunkt t1 ein Datentelegramm 18 an den anderen Kommunikationsteilnehmer 14. Mit dem Versenden des Datentelegramms 18 wird eine dem zentralen Kommunikationsteilnehmer 12 zugeordnete Überwachungseinheit 20 für eine vorgegebene oder vorgebbare erste Zeitspanne 22 deaktiviert - erste Deaktivierung 24. Für den anderen Kommunikationsteilnehmer 14 ist eine Sicherungs-Einrichtung 26 vorgesehen, welche bei einem Empfang des Datentelegramms 18 für eine vorgegebene oder vorgebbare zweite Zeitspanne 28 deaktiviert wird - zweite Deaktivierung 30.

FIG 2 zeigt eine schematisch vereinfachte Darstellung einer Ergänzung des Verfahrens gemäß FIG 1. Mit einem Ablaufen der vorgegebenen oder vorgebbaren ersten Zeitspanne 22 wird durch den zentralen Kommunikationsteilnehmer 12 ein Lebenszeichen-Telegramm 32 zu einem Zeitpunkt t2 versandt. Mit dem Versand des Lebenszeichen-Telegramms 32 wird auf Seiten des zentralen Kommunikationsteilnehmers 12 die Überwachungseinheit 20 für die vorgegebene oder vorgebbare erste Zeitspanne 22 deaktiviert. Auf Seiten des anderen Kommunikationsteilnehmers 14 wird mit einem Empfang des Lebenszeichen-Telegramms 32 die Sicherungs-Einrichtung 26 für die vorgegebene oder vorgebbare zweite Zeitspanne 28 deaktiviert. Ein Datentelegramm 18 und ein Lebenszeichen-Telegramm 32 werden also bezüglich der Deaktivierung der Überwachungseinheit 20 sowie der Deaktivierung der Sicherungs-Einrichtung 26 gleich behandelt und fungieren in dem Kommunikationsverbund 10 wie ein Lebenszeichen.

FIG 3 zeigt eine weitere Ergänzung des Verfahrens gemäß FIG 1 oder FIG 2. Wenn weder ein Versand eines Datentelegramms 18 (siehe FIG 1) noch eines Lebenszeichen-Telegramms 32 (siehe FIG 2) erfolgt, läuft die vorgegebene oder vorgebbare zweite Zeitspanne 28 ab. Mit dem Ablaufen der vorgegebenen oder vorgebbaren zweiten Zeitspanne 28 löst der jeweilige andere Kommunikationsteilnehmer 14 ein Signal 34 aus. Mit einem Empfang dieses Signals 34 durch den zentralen Kommunikationsteilnehmer 12 wird dieser rückgesetzt. Zusätzlich oder alternativ wird der jeweilige andere Kommunikationsteilnehmer 14 mit dem Ablauf der vorgegebenen oder vorgebbaren zweiten Zeitspanne 28 in einen sicheren Modus überführt. Nochmals zusätzlich oder alternativ kann auch vorgesehen sein, dass aus dem Signal 34 ein optischer oder akustischer Alarm abgeleitet wird, mittels welchem beispielsweise Bedien- und/oder Wartungspersonal aufmerksam gemacht werden kann.

Bezüglich des mindestens einen Datentelegramms 18 und des mindestens einen Lebenszeichen-Telegramms 32 meint "mit dem Versenden" in der obigen Beschreibung zu FIG 1 und FIG 2 "vor, während oder nach dem Versenden" und kann beispielsweise den Empfang einer Reaktion des anderen Kommunikationsteilnehmers 14 auf das von dem zentralen Kommunikationsteilnehmer 12 versandte Datentelegramm 18 sowie auf das versandte Lebenszeichen-Telegramm 32 umfassen.

Damit lässt sich die Erfindung kurz wie folgt darstellen: Die Erfindung betrifft ein Verfahren zum Betrieb eines Automatisierungssystems mit mindestens einem zentralen Kommunikationsteilnehmer 12, ein solches Automatisierungssystem sowie mindestens einen Kommunikationsteilnehmer (zentraler Kommunikationsteilnehmer), wobei der zentrale Kommunikationsteilnehmer 12 mindestens ein Datentelegramm 18 an mindestens einen anderen Kommunikationsteilnehmer 14 sendet oder senden kann und wobei für den zentralen Kommunikationsteilnehmer 12 eine Überwachungseinheit 20 vorgesehen ist, die mit einem Versenden eines Datentelegramms 18 für eine vorgegebene oder vorgebbare erste Zeitspanne 22 deaktiviert wird.

## Patentansprüche

1. Verfahren zum Betrieb eines Automatisierungssystems mit einer Anzahl kommunikativ verbundener Kommunikationsteilnehmer (12, 14),
wobei mindestens ein zentraler Kommunikationsteilnehmer (12) mindestens ein Datentelegramm (18), an mindestens einen anderen Kommunikationsteilnehmer (14) sendet,
**dadurch gekennzeichnet, dass**
zumindest für den zentralen Kommunikationsteilnehmer (12) eine Überwachungseinheit (20) vorgesehen ist,
wobei die Überwachungseinheit (20) mit einem Versenden eines Datentelegramms (18) durch den zentralen Kommunikationsteilnehmer (12) für eine vorgegebene oder vorgebbare erste Zeitspanne (22) deaktiviert wird,
wobei mit einem Ablauf der vorgegebenen oder vorgebbaren ersten Zeitspanne (22) ein Lebenszeichen-Telegramm (32) durch den zentralen Kommunikationsteilnehmer (12) versandt wird, wobei zumindest für jeden anderen Kommunikationsteilnehmer (14) neben dem zentralen Kommunikationsteilnehmer (12) eine Sicherungs-Einrichtung (26) vorgesehen ist, welche bei einem Empfang des Datentelegramms (18) oder des Lebenszeichen-Telegramms (32) für eine vorgegebene oder vorgebbare zweite Zeitspanne (28) deaktiviert wird.

2. Verfahren nach Anspruch 1,
wobei mit einem Ablauf der vorgegebenen oder vorgebbaren zweiten Zeitspanne (28) der jeweilige andere Kommunikationsteilnehmer (14) ein Signal (34) auslöst.

3. Verfahren nach Anspruch 1 oder 2,
wobei mit dem Ablauf der vorgegebenen oder vorgebbaren zweiten Zeitspanne (28) der jeweilige andere Kommunikationsteilnehmer (14) in einen sicheren Modus überführt wird.

4. Verfahren nach Anspruch 2,
wobei mit einem Empfang des Signals (34) der zentrale Kommunikationsteilnehmer (12) zurückgesetzt wird.

5. Verfahren nach einem der Ansprüche 1 bis 4,
wobei die Überwachungseinheit (20) für die vorgegebene oder vorgebbare erste Zeitspanne (22) deaktiviert wird, sobald eine Reaktion auf das von dem zentralen Kommunikationsteilnehmer (12) versandte Datentelegramm (18) oder Lebenszeichen-Telegramm (32) empfangen wird.

6. Verfahren nach einem der vorangehenden Ansprüche,
wobei der oder jeder zentrale Kommunikationsteilnehmer (12) in dem Automatisierungssystem als Master fungiert.

7. Verfahren nach einem der Ansprüche 1 bis 6,
wobei der oder jeder andere Kommunikationsteilnehmer (14) in dem Automatisierungssystem als Slave fungiert.

8. Kommunikationsteilnehmer (12) zum Betrieb in einem Kommunikationsverbund (10), der zum Versenden von mindestens einem Datentelegramm (18) an mindestens einen anderen Kommunikationsteilnehmer (14) vorgesehen und ausgebildet ist,
**gekennzeichnet durch**
Mittel zum Deaktivieren einer dem Kommunikationsteilnehmer (12) zugeordneten Überwachungseinheit (20) zumindest für eine vorgegebene oder vorgebbare erste Zeitspanne (22) im Zusammenhang mit jedem Versenden eines solchen Datentelegramms (18) und
Mittel zum Erzeugen und Versenden mindestens eines Lebenszeichen-Telegramms (32) nach Ablauf der vorgegebenen oder vorgebbaren ersten Zeitspanne (22) der Deaktivierung der Überwachungseinheit (20).

9. Computerprogramm mit durch einen Computer ausführbaren Programmcodeanweisungen zur Implementierung des Verfahrens nach einem der Ansprüche 1 bis 7, wenn das Computerprogramm auf einem Computer ausgeführt wird.

10. Computerprogrammprodukt, insbesondere Speichermedium, mit einem durch einen Computer ausführbaren Computerprogramm gemäß Anspruch 9.

11. Automatisierungssystem mit Mitteln, insbesondere Programmcodemitteln, insbesondere einer Softwareimplementation des oder jedes oben genannten Verfahrensschrittes oder der oder jeder oben genannten Verfahrensschrittfolge, zur Durchführung des Verfahrens nach einem der Ansprüche 1 bis 7.

## Claims

1. Method for operating an automation system having a number of communicatively linked communication users (12, 14),
at least one central communication user (12) sending at least one data telegram (18) to at least one other communication user (14),
**characterised in that**
a monitoring unit (20) is provided at least for the central communication user (14),
wherein the monitoring unit (20) is deactivated for a predefined or predefinable first time span (22) by a dispatch of a data telegram (18) by the central communication user (12),
wherein on expiry of the predefined or predefinable first time span (22) a sign-of-life telegram (32) is dispatched by the central communication user (12),
wherein a backup unit (26) is provided at least for every other communication user (14) besides the central communication user (12), said backup unit (26) being deactivated for a predefined or predefinable second time span (28) on receipt of the data telegram (18) or of the sign-of-life telegram (32).

2. Method according to claim 1,
wherein on expiry of the predefined or predefinable second time span (28) the respective other communication user (14) triggers a signal (34).

3. Method according to claim 1 or 2,
wherein on expiry of the predefined or predefinable second time span (28) the respective other communication user (14) is transferred to a secure mode.

4. Method according to claim 2,
wherein the central communication user (12) is reset on receipt of the signal (34).

5. Method according to one of claims 1 to 4,
wherein the monitoring unit (20) is deactivated for the predefined or predefinable first time span (22), as soon as a response to the data telegram (18) or sign-of-life telegram (32) dispatched by the central communication user (12) is received.

6. Method according to one of the preceding claims,
wherein the or every central communication user (12) acts as a master in the automation system.

7. Method according to one of claims 1 to 6,
wherein the or every central communication user (14) acts as a slave in the automation system.

8. Communication user (12) for operation in a communication network (10), which is provided and designed for the dispatch of at least one data telegram (18) to at least one other communication user (14),
**characterised by**
means for deactivating a monitoring unit (20) assigned to the communication user (12) at least for a predefined or predefinable first time span (22) in connection with each dispatch of such a data telegram (18) and
means for generating and dispatching at least one sign-of-life telegram (32) on expiry of the predefined or predefinable first time span (22) of the deactivation of the monitoring unit (20).

9. Computer program having program code instructions that can be executed by a computer, for implementation of the method according to one of claims 1 to 7, when the computer program is executed on a computer.

10. Computer program product, in particular storage medium, having a computer program according to claim 9 which can be executed by a computer.

11. Automation system having means, in particular program code means, in particular a software implementation of the or every aforementioned method step or of the or every aforementioned method step sequence, for performance of the method according to one of claims 1 to 7.

## Revendications

1. Procédé pour faire fonctionner un système d'automatisation ayant un certain nombre de participants (12, 14) à la communication reliés en communication,
dans lequel au moins un participant (12) central à la communication envoie au moins un télégramme (18) de données à au moins un autre participant (14) à la communication,
**caractérisé en ce que**
il est prévu une unité (20) de contrôle au moins pour le participant (12) central à la communication,
l'unité (20) de contrôle étant désactivée pendant un premier laps de temps (22), prescrit ou pouvant l'être, par un envoi d'un télégramme (18) de données par le participant (12) central à la communication,
dans lequel avec l'expiration du premier laps de temps (22) prescrit ou pouvant l'être, un télégramme (32) de signe de vie est envoyé par le participant (12) central à la communication, dans lequel au moins pour chaque autre participant (14) à la communication, outre le participant (12) central à la communication, est prévu un dispositif (26) de sécurité qui, à réception du télégramme (18) de données ou du télégramme (32) de signe de vie, est désactivé pour un deuxième laps de temps (28), prescrit ou pouvant l'être.

2. Procédé suivant la revendication 1,
dans lequel, à l'expiration du deuxième laps de temps (28), prescrit ou pouvant l'être, l'autre participant (14) à la communication respectif déclenche un signal (34).

3. Procédé suivant la revendication 1 ou 2,
dans lequel, à l'expiration du deuxième laps de temps (28), prescrit ou pouvant l'être, l'autre participant (14) à la communication respectif passe dans un mode sur.

4. Procédé suivant la revendication 2,
dans lequel le participant (12) central à la communication est remis à l'état initial par une réception du signal (14).

5. Procédé suivant l'une des revendications 1 à 4,
dans lequel l'unité (20) de contrôle est désactivée pendant le premier laps de temps (22), prescrit ou pouvant l'être, dès qu'une réaction au télégramme (18) ou au télégramme (32) de signe de vie émis par le participant (12) central à la communication est reçu.

6. Procédé suivant l'une des revendications précédentes,
dans lequel le ou chaque participant (12) central à la communication sert de maître dans le système d'automatisation.

7. Procédé suivant l'une des revendications 1 à 6,
dans lequel le ou chaque autre participant (14) à la communication sert d'esclave dans le système d'automatisation.

8. Participant (12) à la communication pour le fonctionnement dans un ensemble (10) de communication, qui est prévu et constitué pour envoyer au moins un télégramme (18) de données à au moins un autre participant (14) à la communication,
**caractérisé par**
des moyens de désactivation d'une unité (20) de contrôle affecté au participant (12) à la communication au moins pendant un premier laps de temps (22), prescrit ou pouvant l'être, en relation avec chaque envoi d'un télégramme (18) de données de ce genre, et
des moyens de production et d'envoi d'au moins un télégramme (32) de signe de vie après expiration du premier laps de temps, (22) prescrit ou pouvant l'être, de la désactivation de l'unité (20) de contrôle.

9. Programme informatique ayant des instructions de code de programme pouvant être exécutées par un ordinateur pour la mise en oeuvre du procédé selon l'une des revendications 1 à 7, lorsque le programme informatique est exécuté sur un ordinateur.

10. Produit de programme informatique, notamment support de mémoire, ayant un programme informatique pouvant être exécuté par un ordinateur suivant la revendication 9.

11. Système d'automatisation ayant des moyens, notamment des moyens de codes de programme, notamment une mise en oeuvre logicielle du ou de chaque stade de procédé mentionné ci-dessus ou de la ou de chaque succession de stades de procédé mentionnée ci-dessus pour la mise en oeuvre du procédé suivant l'une des revendications 1 à 7.
